# FASCICULE DE BREVET EUROPEEN

(11) **EP 3 230 084 B1**
(45) Date de publication et mention de la délivrance du brevet: **06.02.2019**
(21) Numéro de dépôt: 15804447.9
(22) Date de dépôt: 02.12.2015
(51) Int. Cl.: B60C 9/26, B60C 9/18

(54) **ARMATURE DE SOMMET DE PROTECTION DE PNEUMATIQUE POUR AVION**
SCHÜTZENDE GÜRTELVERSTÄRKUNG FÜR EINEN FLUGZEUGREIFEN
PROTECTIVE CROWN REINFORCEMENT FOR AN AIRCRAFT TYRE

(30) Priorité: 08.12.2014 FR 1462034
(43) Date de publication de la demande: 18.10.2017
(73) Titulaire: Compagnie Générale des Etablissements Michelin, 63000 Clermont-Ferrand (FR)
(72) Inventeur: FRANCOIS, Olivier, 63040 Clermont-Ferrand Cedex 9 (FR); KIEBRE, Rimyalegdo, 63040 Clermont-Ferrand Cedex9 (FR)
(74) Mandataire: Millanvois, Patrick Jacques Jean
(86) Numéro de dépôt international: PCT/EP2015/078366
(87) Numéro de publication internationale: WO 2016/091684

(56) Documents cités:
- EP-A1- 0 540 303
- WO-A1-88/03481
- FR-A1- 2 984 231
- FR-A2- 2 518 462
- US-A- 1 201 257

## Description

La présente invention concerne un pneumatique pour avion, et, en particulier, l'armature de protection d'un pneumatique pour avion.

Des pneumatiques pour avion sont divulgués dans les documents FR-A-2518462, FR-A-2984231 et EP-A-0540303.

De façon générale, un pneumatique ayant une géométrie de révolution par rapport à un axe de rotation, la géométrie du pneumatique est usuellement décrite dans un plan méridien ou radial contenant l'axe de rotation du pneumatique. Pour un plan méridien donné, les directions radiale, axiale et circonférentielle désignent respectivement les directions perpendiculaire à l'axe de rotation du pneumatique, parallèle à l'axe de rotation du pneumatique et perpendiculaire au plan méridien.

Dans ce qui suit, les expressions « radialement », « axialement » et « circonférentiellement » signifient respectivement « selon la direction radiale », « selon la direction axiale » et « selon la direction circonférentielle » du pneumatique. Les expressions « radialement intérieur, respectivement radialement extérieur» signifient « plus proche, respectivement plus éloigné, de l'axe de rotation du pneumatique, selon la direction radiale, que ». Les expressions « axialement intérieur, respectivement axialement extérieur» signifient « plus proche, respectivement plus éloigné, du plan équatorial du pneumatique, selon la direction axiale, que », le plan équatorial du pneumatique étant le plan perpendiculaire à l'axe de rotation du pneumatique passant par le milieu de la bande de roulement du pneumatique.

L'armature de protection d'un pneumatique est une structure cylindrique ayant pour axe de révolution l'axe de rotation du pneumatique. L'armature de protection s'étend axialement depuis une première extrémité axiale jusqu'à une deuxième extrémité axiale sur une largeur axiale L et s'étend radialement depuis une première face radialement intérieure jusqu'à une deuxième face radialement extérieure sur une épaisseur radiale moyenne T. Selon la direction radiale, l'armature de protection est un empilage d'au moins une couche de protection, constituée d'éléments de renforcement ou renforts métalliques ou textiles. Les renforts sont enrobés dans un mélange élastomérique, c'est-à-dire un matériau à base de caoutchouc naturel ou synthétique obtenu par mélangeage de divers constituants. Lorsque l'armature de protection est constituée par un empilage d'au moins deux couches de protection, la largeur axiale L de l'armature de protection est la largeur axiale de la couche de protection ayant la plus grande largeur axiale, et l'épaisseur radiale moyenne T de l'armature de protection est la somme des épaisseurs radiales moyennes des couches de protection. L'armature de protection est radialement intérieure à une bande de roulement et radialement extérieure à une armature de travail. L'armature de protection protège essentiellement l'armature de travail des agressions susceptibles de se propager à travers la bande de roulement radialement vers l'intérieur du pneumatique.

La bande de roulement est la partie du pneumatique, destinée à entrer en contact avec un sol par l'intermédiaire d'une surface de roulement radialement extérieure: c'est la partie usante du pneumatique. Dans le cas d'un pneumatique pour avion, la bande de roulement, comprenant au moins un mélange élastomérique, est le plus souvent constituée par des nervures circonférentielles séparées par des creux circonférentiels, appelés sillons circonférentiels.

L'armature de travail, radialement intérieure à l'armature de protection, est également une structure cylindrique ayant pour axe de révolution l'axe de rotation du pneumatique. Selon la direction radiale, l'armature de travail est un empilage d'au moins deux couches de travail, constituées le plus souvent de renforts textiles enrobés dans un mélange élastomérique. Dans un pneumatique pour avion, les renforts d'une couche de travail ont généralement, selon la direction circonférentielle du pneumatique, une trajectoire périodique en zigzag dont l'amplitude définit la largeur axiale de la couche de travail. L'armature de travail pilote le comportement mécanique du sommet du pneumatique. L'ensemble constitué par l'armature de travail et l'armature de protection constitue l'armature de sommet.

Selon les conceptions actuelles d'un pneumatique pour avion, l'armature de protection est souvent constituée par une seule couche de protection. La couche de protection comprend soit des renforts métalliques ayant une trajectoire ondulée selon la direction circonférentielle du pneumatique, soit des renforts textiles ayant une trajectoire ondulée selon la direction circonférentielle du pneumatique ou formant un angle avec la direction circonférentielle du pneumatique.

Dans le cas d'une couche de protection à renforts métalliques à trajectoire ondulée selon la direction circonférentielle du pneumatique, la masse de l'armature de protection est relativement élevée, compte tenu de la masse des renforts métalliques, ce qui est pénalisant pour la masse du pneumatique et donc de la charge utile embarquée par l'avion.

Que la couche de protection comprenne des renforts métalliques à trajectoire ondulée ou des renforts textiles à trajectoire ondulée ou à angle, il a été constaté que l'armature de protection peut éventuellement être insuffisante pour empêcher la migration d'objets étrangers depuis la bande de roulement jusqu'à l'armature de travail, en d'autres termes qu'elle peut être insuffisamment résistante aux dommages provoqués par des objets étrangers ou « Foreign Object Damages » (FOD). En effet, compte tenu de ses conditions d'usage sévères, caractérisées par une pression de gonflage, une charge statique et une vitesse élevées, un pneumatique pour avion est particulièrement sensible à toute agression de sa bande de roulement par un objet étranger perforant, présent de façon aléatoire sur la piste. En cas d'une telle agression de la bande de roulement, l'objet étranger perforant, après avoir traversé l'armature de protection, peut progresser vers l'armature de travail. En cas de perforation totale de l'armature de travail, il peut en résulter une perte de pression lente et un endommagement général de la structure du pneumatique. En cas de perforation partielle de l'armature de travail, la rechapabilité du pneumatique, c'est-à-dire son aptitude à avoir sa bande de roulement remplacée après usure, peut ne plus être garantie.

La présente invention a pour objectif d'augmenter la résistance de l'armature de protection d'un pneumatique pour avion à la perforation et à la coupure par des objets étrangers ayant traversé la bande de roulement du pneumatique, c'est-à-dire d'améliorer la résistance de l'armature de protection aux « Foreign Object Damages ».

Cet objectif a été atteint par un pneumatique pour avion comprenant :
- une bande de roulement, destinée à entrer en contact avec un sol,
- une armature de protection, radialement intérieure à la bande de roulement,
- l'armature de protection étant une structure cylindrique ayant pour axe de révolution l'axe de rotation du pneumatique, s'étendant axialement depuis une première extrémité axiale jusqu'à une deuxième extrémité axiale sur une largeur axiale L et s'étendant radialement depuis une première face radialement intérieure jusqu'à une deuxième face radialement extérieure sur une épaisseur radiale moyenne T,
- l'armature de protection comprenant des renforts enrobés dans un mélange élastomérique, ayant un diamètre D et ayant une trajectoire selon la direction circonférentielle du pneumatique,
- l'armature de protection étant radialement extérieure à une armature de travail,
- l'armature de travail comprenant au moins deux couches de travail radialement superposées et comprenant des renforts ayant une trajectoire en zigzag selon la direction circonférentielle du pneumatique,
- l'armature de protection ayant une épaisseur radiale moyenne T au moins égale à 2 fois le diamètre D d'un renfort,
- l'armature de protection comprenant respectivement sur sa face radialement intérieure et sur sa face radialement extérieure des parties en mélange élastomérique ayant une largeur axiale W au moins égale au diamètre D d'un renfort,
- la trajectoire de tout renfort de l'armature de protection, selon la direction circonférentielle du pneumatique, varie radialement entre la première face radialement intérieure et la deuxième face radialement extérieure, de telle sorte que l'ensemble des trajectoires des renforts de l'armature de protection constitue un treillis tridimensionnel,
- l'armature de protection comprenant une première famille de renforts ayant chacun une trajectoire, selon la direction circonférentielle du pneumatique, contenue dans un plan circonférentiel et une deuxième famille de renforts ayant chacun une trajectoire, selon la direction circonférentielle du pneumatique, selon une courbe en zigzag.

Le principe de l'invention est d'obtenir une armature de protection présentant à la fois une meilleure liaison mécanique au niveau de ses faces radialement intérieure et extérieure respectivement avec l'armature de travail et avec la bande de roulement, et une meilleure tenue au déroulage des renforts la constituant en cas d'endommagement de ladite armature de protection, grâce à un effet de treillis tridimensionnel, c'est-à-dire un effet d'enchevêtrement des renforts.

Selon l'invention, l'épaisseur radiale moyenne T de l'armature de protection est au moins égale à 2 fois le diamètre D d'un renfort pour pouvoir obtenir l'effet de treillis tridimensionnel.

Encore selon l'invention, l'armature de protection comprend respectivement sur sa face radialement intérieure et sur sa face radialement extérieure des parties en mélange élastomérique ayant une largeur axiale W au moins égale au diamètre D d'un renfort. En d'autres termes, au niveau de la face radialement intérieure respectivement extérieure, il existe des parties en mélange élastomérique exemptes de tout renfort. En pratique, en fabrication, avant l'étape de cuisson du pneumatique, ces parties en mélange élastomérique correspondent à des trous interstitiels entre les renforts qui sont remplis par un mélange élastomérique au moment de la cuisson du pneumatique. Ainsi, au niveau de la face radialement intérieure respectivement extérieure, il y a une alternance de parties comprenant des renforts et des parties exemptes de renforts, ces dernières contribuant à une liaison plus efficace avec les composants en interface avec l'armature de protection, tels que l'armature de travail et la bande de roulement. Pour être efficaces, ces parties en mélange élastomérique doivent avoir une dimension minimale, caractérisée par une largeur axiale minimale W égale à un diamètre de renfort D.

Une autre caractéristique essentielle de l'invention est que la trajectoire de tout renfort de l'armature de protection, selon la direction circonférentielle du pneumatique, varie radialement entre la première face radialement intérieure et la deuxième face radialement extérieure, de telle sorte que l'ensemble des trajectoires des renforts de l'armature de protection constitue un treillis tridimensionnel. Autrement dit, la trajectoire de tout renfort, selon la direction circonférentielle, n'est pas contenue dans une surface cylindrique ayant pour axe de révolution l'axe de rotation du pneumatique. De plus cette trajectoire est ou non variable selon la direction axiale. Il en résulte que, selon la direction circonférentielle, tout renfort est alternativement radialement extérieur et radialement intérieur à au moins un autre renfort. L'ensemble de tels renforts constitue ainsi une structure cylindrique ayant, dans son épaisseur radiale, une forme de treillis tridimensionnel ou d'enchevêtrement, de telle sorte que tout renfort sectionné accidentellement en un point par un objet étranger est bloqué par les autres renforts en contact et ne peut pas se dérouler sur toute la circonférence. Ce treillis tridimensionnel est donc un système autobloquant garantissant le non déroulement circonférentiel complet des renforts.

Une dernière caractéristique essentielle de l'invention est d'avoir une armature de protection comprenant une première famille de renforts ayant chacun une trajectoire, selon la direction circonférentielle du pneumatique, contenue dans un plan circonférentiel et une deuxième famille de renforts ayant chacun une trajectoire, selon la direction circonférentielle du pneumatique, selon une courbe en zigzag. En d'autres termes, l'armature de protection est constituée par un enchevêtrement de deux familles de renforts, respectivement contenus dans des plans circonférentiels, formant un angle nul vis-à-vis de la direction circonférentielle, et s'étendant selon des courbes en zigzag, selon la direction circonférentielle. Ce treillis particulier constitue un tissu de protection dont les fils de chaîne correspondent aux renforts purement circonférentiels de la première famille et dont les fils de trame correspondent aux renforts en zigzag de la deuxième famille.

Un premier avantage de ce type de tissu de protection est de garantir le blocage réciproque des renforts constituant la trame et ceux constituant la chaîne. Un deuxième avantage est de garantir une productivité satisfaisante de la fabrication d'un tel tissu de protection. Un dernier avantage est de garantir la présence de parties en mélange élastomérique dans les espaces interstitiels, entre les renforts des première et deuxième familles, sur les faces respectivement radialement intérieure et radialement extérieure de l'armature de protection, ce qui permet d'améliorer les liaisons mécaniques respectivement entre l'armature de protection et l'armature de travail, et entre l'armature de protection et la bande de roulement.

A titre d'exemple, un tel tissu de protection peut être obtenu par l'enroulement, selon la direction circonférentielle du pneumatique, sur une surface cylindrique de pose, alternativement d'un tour de renfort en zigzag et d'un tour de renfort circonférentiel.

Avantageusement, l'armature de protection a une épaisseur radiale moyenne T au plus égale à 5 fois le diamètre D d'un renfort. Au-delà de cette épaisseur radiale moyenne T maximale, la protection est surabondante et la masse de l'armature de protection devient trop importante.

Encore avantageusement, la largeur axiale W des parties en mélange élastomérique, comprises respectivement sur la face radialement intérieure et sur la face radialement extérieure de l'armature de protection, est au plus égale à 10 fois le diamètre D d'un renfort, de préférence au plus égale à 5 fois le diamètre D d'un renfort. Au-delà de cette largeur axiale W maximale, la protection risque de devenir moins efficace vis-à-vis de la migration d'objets étrangers à travers l'armature de protection.

Dans tout plan méridien, le ratio R, entre la somme des largeurs axiales W des parties en mélange élastomérique, comprises respectivement sur la face radialement intérieure et sur la face radialement extérieure de l'armature de protection, et la largeur axiale L de l'armature de protection, est au moins égal à 0.08, de préférence au moins égal à 0.10. Ce ratio caractérise le pourcentage de parties exemptes de renforts par rapport à la largeur axiale L de l'armature de protection. Une valeur minimale de ce ratio est nécessaire à la garantie d'une liaison mécanique suffisante de l'armature de protection, d'une part avec l'armature de travail, d'autre part avec la bande de roulement.

Dans tout plan méridien, le ratio R, entre la somme des largeurs axiales W des parties en mélange élastomérique, comprises respectivement sur la face radialement intérieure et sur la face radialement extérieure de l'armature de protection, et la largeur axiale L de l'armature de protection, est au plus égal à 0.20, de préférence au plus égal à 0.15. Une valeur maximale de ce ratio est nécessaire à la garantie d'une liaison mécanique pas trop forte de l'armature de protection, d'une part avec l'armature de travail, d'autre part avec la bande de roulement.

Selon un mode de réalisation préféré, les renforts de l'armature de protection sont regroupés en bandelettes, comprenant au moins deux renforts consécutifs. L'utilisation de bandelettes de renforts, comprenant, par exemple et de façon non exhaustive, au moins quatre renforts est fréquente dans le domaine des pneumatiques d'avion pour obtenir une productivité de fabrication satisfaisante.

Dans le cas d'une armature de protection constituée par des bandelettes, le pas axial P1 entre deux bandelettes consécutives de renforts de la première famille de renforts ayant chacun une trajectoire, selon la direction circonférentielle du pneumatique, contenue dans un plan circonférentiel est avantageusement au moins égal à la largeur axiale B d'une bandelette et au plus égal à 5 fois la largeur axiale B d'une bandelette. On appelle pas axial entre deux bandelettes consécutives la distance axiale entre leurs extrémités axiales respectives en vis-à-vis. Ce pas doit être suffisant pour garantir la présence d'espaces interstitiels en mélange élastomérique, mais pas trop important pour ne pas laisser migrer des objets étrangers radialement vers l'intérieur du pneumatique.

Egalement dans le cas d'une armature de protection constituée par des bandelettes, le pas axial P2 entre deux bandelettes consécutives de renforts de la deuxième famille de renforts ayant chacun une trajectoire, selon la direction circonférentielle du pneumatique, selon une courbe en zigzag est au moins égal à la largeur axiale B d'une bandelette et au plus égal à 5 fois la largeur axiale B d'une bandelette. On appelle pas axial entre deux bandelettes consécutives la distance axiale entre leurs extrémités axiales respectives en vis-à-vis. Ce pas doit être suffisant pour garantir la présence d'espaces interstitiels en mélange élastomérique, mais pas trop important pour ne pas laisser migrer des objets étrangers radialement vers l'intérieur du pneumatique.

Avantageusement la trajectoire, selon la direction circonférentielle du pneumatique, selon une courbe en zigzag de tout renfort de la deuxième famille de renforts est une courbe périodique ayant une amplitude A égale à la largeur axiale L de l'armature de protection et ayant une période P=2ΠR1/K, K étant un nombre au moins égal à 1 et au plus égal à 10, de préférence au plus égal à 5, et R1 étant le rayon de la première face radialement intérieure. L'amplitude A égale à la largeur axiale L de l'armature de protection permet de générer en une seule fois l'armature de protection sur toute sa largeur. La période P permet de régler l'angle formé par lesdits renforts avec la direction circonférentiellement, typiquement entre 5° et 35°.

Selon une variante préférée, les renforts de l'armature de protection sont constitués d'au moins un matériau textile. En effet un matériau textile garantit un bon compromis entre la masse et la résistance à rupture des renforts. L'utilisation de renforts textile pour l'armature de protection permet une contribution significative à la minimisation de la masse du pneumatique, et donc au gain en charge utile de l'avion.

Les renforts de l'armature de protection sont le plus souvent constitués d'un polyamide aliphatique ou d'un polyamide aromatique ou d'une combinaison d'un polyamide aliphatique et d'un polyamide aromatique. Les renforts en polyamide aromatique, tel que l'aramide, présentent un compromis entre la masse et la résistance à rupture meilleur que celui des renforts en polyamide aliphatique, tel que le nylon. Les renforts constitués d'une combinaison d'un polyamide aliphatique et d'un polyamide aromatique, appelés également des renforts hybrides, présentent à la fois les avantages d'un polyamide aliphatique et ceux d'un polyamide aromatique, à savoir une résistance à rupture élevée, une déformabilité en traction élevée et une masse faible.

Les caractéristiques et autres avantages de l'invention seront mieux compris à l'aide des figures 1 à 3 suivantes, non représentées à l'échelle :
- Figure 1 : demi-vue en coupe du sommet d'un pneumatique pour avion de l'état de la technique, dans un plan radial (YZ) passant par l'axe de rotation (YY') du pneumatique.
- Figure 2 : coupe méridienne de l'armature de protection d'un pneumatique pour avion selon l'invention, dans un plan radial (YZ) passant par l'axe de rotation (YY') du pneumatique.
- Figure 3 : vue de dessus de l'armature de protection d'un pneumatique pour avion selon l'invention.

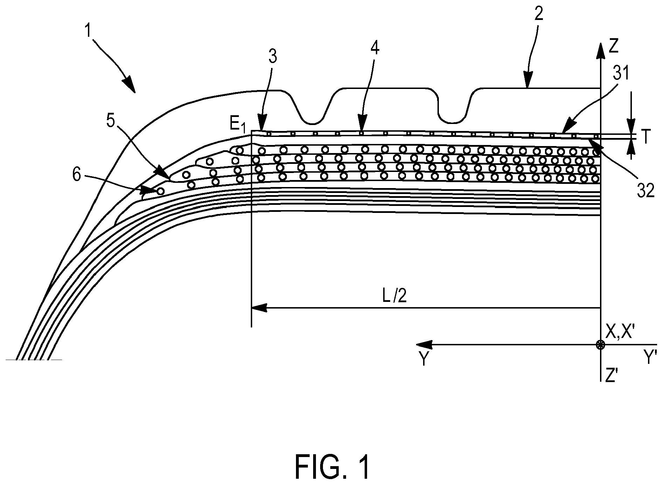

La figure 1 représente, dans un plan radial YZ passant par l'axe de rotation YY' du pneumatique, une demi-vue en coupe du sommet d'un pneumatique 1 pour avion de l'état de la technique, comprenant une bande de roulement 2, destinée à entrer en contact avec un sol et une armature de protection 3, radialement intérieure à la bande de roulement 2. L'armature de protection 3 est une structure cylindrique ayant pour axe de révolution l'axe de rotation YY' du pneumatique, s'étendant axialement depuis une première extrémité axiale E1 jusqu'à une deuxième extrémité axiale E2, symétrique par rapport au plan équatorial XZ (non représentée) sur une largeur axiale L et s'étendant radialement depuis une première face radialement intérieure 31 jusqu'à une deuxième face radialement extérieure 32 sur une épaisseur radiale moyenne T. L'armature de protection 3 comprend des renforts 4 enrobés dans un mélange élastomérique, ayant un diamètre D et ayant une trajectoire selon la direction circonférentielle XX' du pneumatique. L'armature de protection 3 est radialement extérieure à une armature de travail 5 qui comprend, dans le cas présent, quatre couches de travail radialement superposées et constituées par des renforts 6 ayant une trajectoire en zigzag selon la direction circonférentielle XX' du pneumatique (non représentée).

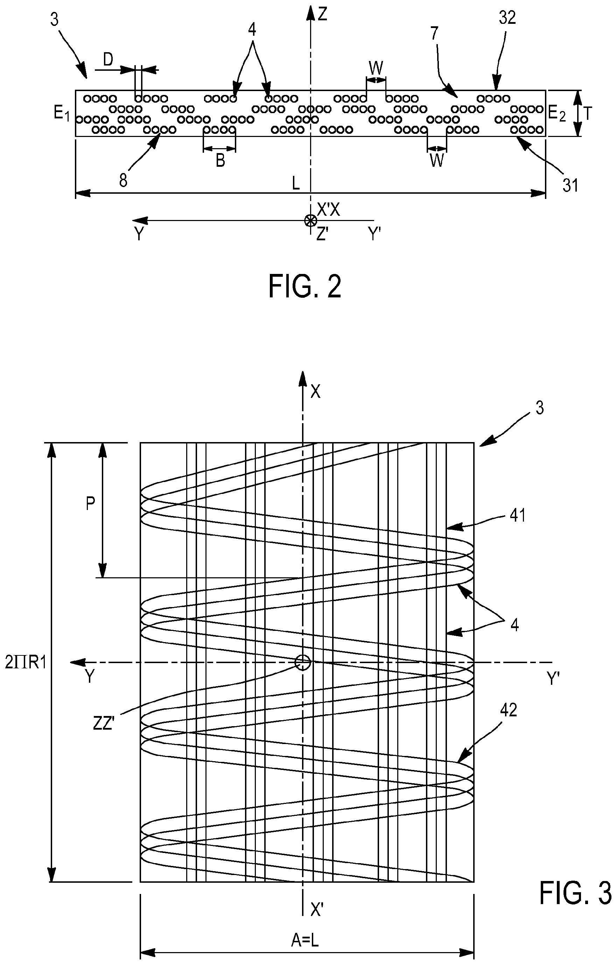

La figure 2 représente une coupe méridienne de l'armature de protection d'un pneumatique pour avion selon l'invention, dans un plan radial YZ passant par l'axe de rotation YY' du pneumatique. L'armature de protection 3 a une épaisseur radiale moyenne T au moins égale à 2 fois le diamètre D d'un renfort 4, dans le cas présent, égale à environ 5 fois le diamètre D d'un renfort 4. L'armature de protection 3 comprend respectivement sur sa face radialement intérieure 31 et sur sa face radialement extérieure 32 des parties en mélange élastomérique 7 ayant une largeur axiale W au moins égale au diamètre D d'un renfort 4. Cette coupe méridienne montre en outre que l'ensemble des trajectoires des renforts 4 de l'armature de protection 3 constitue un treillis tridimensionnel, résultant du fait que la trajectoire de tout renfort 4 de l'armature de protection 3, selon la direction circonférentielle XX' du pneumatique, varie radialement entre la première face radialement intérieure 31 et la deuxième face radialement extérieure 32. En outre les renforts 4 de l'armature de protection 3 sont regroupés en bandelettes 8, comprenant, dans le cas présent, quatre renforts 4 consécutifs et ayant une largeur axiale B.

La figure 3 représente une vue de dessus de l'armature de protection d'un pneumatique pour avion selon l'invention, sous une forme simplifiée. L'armature de protection 3 comprend une première famille de renforts 41 ayant chacun une trajectoire, selon la direction circonférentielle XX' du pneumatique, contenue dans un plan circonférentiel XZ et une deuxième famille de renforts 42 ayant chacun une trajectoire, selon la direction circonférentielle XX' du pneumatique, selon une courbe en zigzag. Dans cette figure simplifiée, la totalité des renforts des première et deuxième familles n'est pas intégralement représentée pour faciliter la compréhension. En ce qui concerne la deuxième famille de renforts 42, la trajectoire, selon la direction circonférentielle XX' du pneumatique, selon une courbe en zigzag de tout renfort 4 de la deuxième famille de renforts 42 est une courbe périodique ayant une amplitude A égale à la largeur axiale L de l'armature de protection 3 et ayant une période P=2ΠR1/K, K étant sur l'exemple présenté environ égal à 3, et R1 étant le rayon de la première face radialement intérieure 31.

Les inventeurs ont réalisé l'invention pour un pneumatique pour avion de dimension 46X17 R 20 dont l'armature de protection est un tissu de protection, constituant un treillis tridimensionnel, de largeur axiale L égale à 200 mm et d'épaisseur radiale moyenne T égale à 4 mm. Les renforts textiles constitutifs de l'armature de protection sont en nylon, et ont un diamètre D égale 1 mm. La largeur axiale W des parties en mélange élastomérique est comprise entre 2 mm et 7 mm.

## Revendications

1. Pneumatique (1) pour avion comprenant :
- une bande de roulement (2), destinée à entrer en contact avec un sol,
- une armature de protection (3), radialement intérieure à la bande de roulement (2),
- l'armature de protection (3) étant une structure cylindrique ayant pour axe de révolution l'axe de rotation (YY') du pneumatique, s'étendant axialement depuis une première extrémité axiale (E1) jusqu'à une deuxième extrémité axiale (E2) sur une largeur axiale L et s'étendant radialement depuis une première face radialement intérieure (31) jusqu'à une deuxième face radialement extérieure (32) sur une épaisseur radiale moyenne T,
- l'armature de protection (3) comprenant des renforts (4) enrobés dans un mélange élastomérique, ayant un diamètre D et ayant une trajectoire selon la direction circonférentielle (XX') du pneumatique,
- l'armature de protection (3) étant radialement extérieure à une armature de travail (5),
- l'armature de travail (5) comprenant au moins deux couches de travail radialement superposées et constituées par des renforts (6) ayant une trajectoire en zigzag selon la direction circonférentielle (XX') du pneumatique,
**caractérisé en ce que** l'armature de protection (3) a une épaisseur radiale moyenne T au moins égale à 2 fois le diamètre D d'un renfort (4), **en ce que** l'armature de protection (3) comprend respectivement sur sa face radialement intérieure (31) et sur sa face radialement extérieure (32) des parties en mélange élastomérique (7) ayant une largeur axiale W au moins égale au diamètre D d'un renfort (4), **en ce que** la trajectoire de tout renfort (4) de l'armature de protection (3), selon la direction circonférentielle (XX') du pneumatique, varie radialement entre la première face radialement intérieure (31) et la deuxième face radialement extérieure (32), de telle sorte que l'ensemble des trajectoires des renforts (4) de l'armature de protection (3) constitue un treillis tridimensionnel **et en ce que** l'armature de protection (3) comprend une première famille de renforts (41) ayant chacun une trajectoire, selon la direction circonférentielle (XX') du pneumatique, contenue dans un plan circonférentiel (XZ) et une deuxième famille de renforts (42) ayant chacun une trajectoire, selon la direction circonférentielle (XX') du pneumatique, selon une courbe en zigzag.

2. Pneumatique (1) pour avion selon la revendication 1, **dans lequel** l'armature de protection (3) a une épaisseur radiale moyenne T au plus égale à 5 fois le diamètre D d'un renfort (4).

3. Pneumatique (1) pour avion selon l'une des revendications 1 ou 2, **dans lequel** la largeur axiale W des parties en mélange élastomérique (7), comprises respectivement sur la face radialement intérieure (31) et sur la face radialement extérieure (32) de l'armature de protection (3), est au plus égale à 10 fois le diamètre D d'un renfort (4), de préférence au plus égale à 5 fois le diamètre D d'un renfort (4).

4. Pneumatique (1) pour avion selon l'une quelconque des revendications 1 à 3, **dans lequel,** dans tout plan méridien (YZ), le ratio R, entre la somme des largeurs axiales W des parties en mélange élastomérique (7), compris respectivement sur la face radialement intérieure (31) et sur la face radialement extérieure (32) de l'armature de protection (3), et la largeur axiale L de l'armature de protection (3), est au moins égal à 0.08, de préférence au moins égal à 0.10.

5. Pneumatique (1) pour avion selon l'une quelconque des revendications 1 à 4, **dans lequel,** dans tout plan méridien (YZ), le ratio R, entre la somme des largeurs axiales W des parties en mélange élastomérique (7), compris respectivement sur la face radialement intérieure (31) et sur la face radialement extérieure (32) de l'armature de protection (3), et la largeur axiale L de l'armature de protection (3),est au plus égal à 0.20, de préférence au plus égal à 0.15.

6. Pneumatique (1) pour avion selon l'une quelconque des revendications 1 à 5, **dans lequel** les renforts (4) de l'armature de protection (3) sont regroupés en bandelettes (8), comprenant au moins deux renforts (4) consécutifs et ayant une largeur axiale B.

7. Pneumatique (1) pour avion selon la revendication 6, **dans lequel** le pas axial P1 entre deux bandelettes (8) consécutives de renforts (4) de la première famille de renforts (41) ayant chacun une trajectoire, selon la direction circonférentielle (XX') du pneumatique, contenue dans un plan circonférentiel (XZ) est au moins égal à la largeur axiale B d'une bandelette (8) et au plus égal à 5 fois la largeur axiale B d'une bandelette (8).

8. Pneumatique (1) pour avion selon l'une des revendications 6 ou 7, **dans lequel** le pas axial P2 entre deux bandelettes (8) consécutives de renforts (4) de la deuxième famille de renforts (42) ayant chacun une trajectoire, selon la direction circonférentielle (XX') du pneumatique, selon une courbe en zigzag est au moins égal à la largeur axiale B d'une bandelette (8) et au plus égal à 5 fois la largeur axiale B d'une bandelette (8).

9. Pneumatique (1) pour avion selon l'une quelconque des revendications 1 à 8, **dans lequel** la trajectoire, selon la direction circonférentielle (XX') du pneumatique, selon une courbe en zigzag de tout renfort (4) de la deuxième famille de renforts (42) est une courbe périodique ayant une amplitude A égale à la largeur axiale L de l'armature de protection (3) et ayant une période P=2ΠR1/K, K étant un nombre au moins égal à 1 et au plus égal à 10, de préférence au plus égal à 5, et R1 étant le rayon de la première face radialement intérieure (31).

10. Pneumatique (1) pour avion selon l'une quelconque des revendications 1 à 9, **dans lequel** les renforts (4) de l'armature de protection (3) sont constitués d'au moins un matériau textile.

11. Pneumatique (1) pour avion selon l'une quelconque des revendications 1 à 10, **dans lequel** les renforts (4) de l'armature de protection (3) sont constitués d'un polyamide aliphatique ou d'un polyamide aromatique ou d'une combinaison d'un polyamide aliphatique et d'un polyamide aromatique.

## Patentansprüche

1. Flugzeugreifen (1), umfassend:
- einen Laufstreifen (2), der dazu bestimmt ist, mit einem Boden in Kontakt zu treten,
- eine Schutzbewehrung (3) radial innerhalb des Laufstreifens (2),
- wobei die Schutzbewehrung (3) eine zylindrische Struktur ist, welche die Rotationsachse (YY') des Reifens zur Drehachse hat, sich axial über eine axiale Breite L von einem ersten axialen Ende (E1) zu einem zweiten axialen Ende (E2) erstreckt und sich radial über eine mittlere radiale Dicke T von einer ersten radial inneren Seite (31) zu einer zweiten radial äußeren Seite (32) erstreckt,
- wobei die Schutzbewehrung (3) in ein Elastomergemisch eingebettete Verstärkungen (4) aufweist, die einen Durchmesser D aufweisen und eine Bahn in der Umfangsrichtung (XX') des Reifens aufweisen,
- wobei sich die Schutzbewehrung (3) radial außerhalb einer Arbeitsbewehrung (5) befindet,
- wobei die Arbeitsbewehrung (5) mindestens zwei Arbeitsschichten umfasst, die radial übereinanderliegen und durch Verstärkungen (6) mit einer in der Umfangsrichtung (XX') des Reifens zickzackförmigen Bahn gebildet sind,
**dadurch gekennzeichnet, dass** die Schutzbewehrung (3) eine mittlere radiale Dicke T aufweist, die mindestens gleich dem Doppelten des Durchmessers D einer Verstärkung (4) ist, dadurch, dass die Schutzbewehrung (3) auf ihrer radial inneren Seite (31) und auf ihrer radial äußeren Seite (32) jeweils Teile aus Elastomergemisch (7) umfasst, die eine axiale Breite W aufweisen, die mindestens gleich dem Durchmesser D einer Verstärkung (4) ist, dadurch, dass die Bahn jeder Verstärkung (4) der Schutzbewehrung (3) in der Umfangsrichtung (XX') des Reifens radial zwischen der radial inneren ersten Seite (31) und der radial äußeren zweiten Seite (32) variiert, sodass die Gesamtheit der Bahnen der Verstärkungen (4) der Schutzbewehrung (3) ein dreidimensionales Geflecht bildet, und dadurch, dass die Schutzbewehrung (3) eine erste Gruppe von Verstärkungen (41), die jede eine in der Umfangsrichtung (XX') des Reifens in einer Umfangsebene (XZ) enthaltene Bahn aufweisen, und eine zweite Gruppe von Verstärkungen (42), die jede eine Bahn in der Umfangsrichtung (XX') des Reifens in einer zickzackförmigen Kurve aufweisen, umfasst.

2. Flugzeugreifen (1) nach Anspruch 1, wobei die Schutzbewehrung (3) eine mittlere radiale Dicke T aufweist, die höchstens gleich dem Fünffachen des Durchmessers D einer Verstärkung (4) ist.

3. Flugzeugreifen (1) nach einem der Ansprüche 1 oder 2, wobei die axiale Breite W der Teile aus Elastomergemisch (7), die jeweils auf der radial inneren Seite (31) und auf der radial äußeren Seite (32) der Schutzbewehrung (3) enthalten sind, höchstens gleich dem Zehnfachen des Durchmessers D einer Verstärkung (4), vorzugsweise höchstens gleich dem Fünffachen des Durchmessers D einer Verstärkung (4), ist.

4. Flugzeugreifen (1) nach einem der Ansprüche 1 bis 3, wobei in jeder Meridianebene (YZ) das Verhältnis R zwischen der Summe der axialen Breiten W der Teile aus Elastomergemisch (7), die jeweils auf der radial inneren Seite (31) und auf der radial äußeren Seite (32) der Schutzbewehrung (3) enthalten sind, und der axialen Breite L der Schutzbewehrung (3) mindestens 0,08, vorzugsweise mindestens 0,10 beträgt.

5. Flugzeugreifen (1) nach einem der Ansprüche 1 bis 4, wobei in jeder Meridianebene (YZ) das Verhältnis R zwischen der Summe der axialen Breiten W der Teile aus Elastomergemisch (7), die jeweils auf der radial inneren Seite (31) und auf der radial äußeren Seite (32) der Schutzbewehrung (3) enthalten sind, und der axialen Breite L der Schutzbewehrung (3) höchstens 0,20, vorzugsweise höchstens 0,15 beträgt.

6. Flugzeugreifen (1) nach einem der Ansprüche 1 bis 5, wobei die Verstärkungen (4) der Schutzbewehrung (3) zu Streifen (8) zusammengefasst sind, die mindestens zwei aufeinanderfolgende Verstärkungen (4) umfassen und eine axiale Breite B aufweisen.

7. Flugzeugreifen (1) nach Anspruch 6, wobei der axiale Abstand P1 zwischen zwei aufeinanderfolgenden Streifen (8) von Verstärkungen (4) der ersten Gruppe von Verstärkungen (41), die jede eine in der Umfangsrichtung (XX') des Reifens in einer Umfangsebene (XZ) enthaltene Bahn aufweisen, mindestens gleich der axialen Breite B eines Streifens (8) und höchstens gleich dem Fünffachen der axialen Breite B eines Streifens (8) ist.

8. Flugzeugreifen (1) nach einem der Ansprüche 6 oder 7, wobei der axiale Abstand P2 zwischen zwei aufeinanderfolgenden Streifen (8) von Verstärkungen (4) der zweiten Gruppe von Verstärkungen (42), die jede eine Bahn in der Umfangsrichtung (XX') des Reifens in einer zickzackförmigen Kurve aufweisen, mindestens gleich der axialen Breite B eines Streifens (8) und höchstens gleich dem Fünffachen der axialen Breite B eines Streifens (8) ist.

9. Flugzeugreifen (1) nach einem der Ansprüche 1 bis 8, wobei die Bahn in der Umfangsrichtung (XX') des Reifens in einer zickzackförmigen Kurve jeder Verstärkung (4) der zweiten Verstärkungsgruppe (42) eine periodische Kurve ist, die eine Amplitude A aufweist, die gleich der axialen Breite L der Schutzbewehrung (3) ist, und die eine Periode P = 2ΠR1/K aufweist, wobei K eine Zahl von mindestens gleich 1 und höchstens gleich 10, vorzugsweise höchstens gleich 5, ist und R1 der Radius der radial inneren ersten Seite (31) ist.

10. Flugzeugreifen (1) nach einem der Ansprüche 1 bis 9, wobei die Verstärkungen (4) der Schutzbewehrung (3) aus mindestens einem textilen Material gebildet sind.

11. Flugzeugreifen (1) nach einem der Ansprüche 1 bis 10, wobei die Verstärkungen (4) der Schutzbewehrung (3) aus einem aliphatischen Polyamid oder aus einem aromatischen Polyamid oder aus einer Kombination eines aliphatischen Polyamids und eines aromatischen Polyamids gebildet sind.

## Claims

1. Aircraft tyre (1) comprising:
- a tread (2), intended to come into contact with a ground,
- a protective reinforcement (3), radially on the inside of the tread (2),
- the protective reinforcement (3) having a cylindrical structure having as its axis of revolution the axis of rotation (YY') of the tyre, extending axially from a first axial end (E1) as far as a second axial end (E2) over an axial width L and extending radially from a radially interior first face (31) as far as a radially exterior second face (32) over a mean radial thickness T,
- the protective reinforcement (3) comprising reinforcers (4) coated in an elastomer compound, having a diameter D and having a path in the circumferential direction (XX') of the tyre,
- the protective reinforcement (3) being radially on the outside of a working reinforcement (5),
- the working reinforcement (5) comprising at least two radially superposed working layers made up of reinforcers (6) having a zigzag path in the circumferential direction (XX') of the tyre,
**characterized in that** the protective reinforcement (3) has a mean radial thickness T at least equal to two times the diameter D of a reinforcer (4), **in that** the protective reinforcement (3) comprises respectively on its radially interior face (31) and on its radially exterior face (32) parts (7) made of elastomeric compound having an axial width W at least equal to the diameter D of a reinforcer (4), **in that** the path of any reinforcer (4) of the protective reinforcement (3), in the circumferential direction (XX') of the tyre, varies radially between the radially interior first face (31) and the radially exterior second face (32), in such a way that the set of paths of the reinforcers (4) of the protective reinforcement (3) constitutes a three-dimensional lattice **and in that** the protective reinforcement (3) comprises a first family of reinforcers (41) each having a path, in the circumferential direction (XX') of the tyre, that is contained in a circumferential plane (XZ) and a second family of reinforcers (42) each having a path, in the circumferential direction (XX') of the tyre, that follows a zigzag curve.

2. Aircraft tyre (1) according to Claim 1, **in which** the protective reinforcement (3) has a mean radial thickness T at most equal to five times the diameter D of a reinforcer (4).

3. Aircraft tyre (1) according to either of Claims 1 and 2, **in which** the axial width W of the parts made of elastomeric compound (7), comprised respectively on the radially interior face (31) and on the radially exterior face (32) of the protective reinforcement (3), is at most equal to ten times the diameter D of a reinforcer (4), preferably at most equal to five times the diameter D of a reinforcer (4).

4. Aircraft tyre (1) according to any one of Claims 1 to 3, **in which,** in any meridian plane (YZ), the ratio R, between the sum of the axial widths W of the parts made of elastomeric compound (7), comprised respectively on the radially interior face (31) and on the radially exterior face (32) of the protective reinforcement (3), and the axial width L of the protective reinforcement (3), is at least equal to 0.08, preferably at least equal to 0.10.

5. Aircraft tyre (1) according to any one of Claims 1 to 4, **in which,** in any meridian plane (YZ), the ratio R, between the sum of the axial widths W of the parts made of elastomeric compound (7), comprised respectively on the radially interior face (31) and on the radially exterior face (32) of the protective reinforcement (3), and the axial width L of the protective reinforcement (3), is at most equal to 0.20, preferably at most equal to 0.15.

6. Aircraft tyre (1) according to any one of Claims 1 to 5, **in which** the reinforcers (4) of the protective reinforcement (3) are grouped into strips (8), comprising at least two consecutive reinforcers (4) and having an axial width B.

7. Aircraft tyre (1) according to Claim 6, **in which** the axial spacing P1 between two consecutive strips (8) of reinforcers (4) of the first family of reinforcers (41) each having a path, in the circumferential direction (XX') of the tyre, that is contained in a circumferential plane (XZ) is at least equal to the axial width B of a strip (8) and at most equal to five times the axial width B of a strip (8).

8. Aircraft tyre (1) according to either of Claims 6 and 7, **in which** the axial spacing P2 between two consecutive strips (8) of reinforcers (4) of the second family of reinforcers (42) each having a path, in the circumferential direction (XX') of the tyre, that follows a zigzag curve is at least equal to the axial width B of a strip (8) and at most equal to five times the axial width B of a strip (8).

9. Aircraft tyre (1) according to any one of Claims 1 to 8, **in which** the path, in the circumferential direction (XX') of the tyre, in a zigzag curve of any reinforcer (4) of the second family of reinforcers (42) is a periodic curve having an amplitude A equal to the axial width L of the protective reinforcement (3) and having a period P=2ΠR1/K, K being a number at least equal to 1 and at most equal to 10, preferably at most equal to 5, and R1 being the radius of the radially interior first face (31).

10. Aircraft tyre (1) according to any one of Claims 1 to 9, **in which** the reinforcers (4) of the protective reinforcement (3) are made of at least one textile material.

11. Aircraft tyre (1) according to any one of Claims 1 to 10, **in which** the reinforcers (4) of the protective reinforcement (3) are made of an aliphatic polyamide or of an aromatic polyamide or of a combination of an aliphatic polyamide and of an aromatic polyamide.
